# EUROPEAN PATENT APPLICATION

(11) **EP 2 251 473 A1**
(43) Date of publication of application: **17.11.2010**
(21) Application number: 09425164.2
(22) Date of filing: 29.04.2009
(51) Int. Cl.: D04H 1/64, D04H 1/46, G09F 3/00, A41D 27/00

(54) **Label**

(71) Applicant: Fiscagomma S.p.A., 27029 Vigevano PV (IT)
(72) Inventor: Costamagna, Achille, 27029 Vigevano, Pavia (IT)
(74) Representative: Long, Giorgio

(57) **Abstract**

The present invention relates to a label or plate to be affixed to clothing items, particularly to denim fabric items.

Particularly, the present invention relates to a label of the type which can be used on denim fabric clothing items, **characterized in that** it is made of a polyamide-based nonwoven fabric, which is impregnated with polyurethane resin. Preferably, the polyurethane resin is a resin based on aromatic polyethers, and the nonwoven fabric is 100% polyamide.

A method to achieve such label is also claimed.

## Description

. The present invention relates to a label or plate to be affixed to clothing items, particularly to denim fabric items.

. The labels normally affixed to jeans-type items are, in most cases, made of natural or synthetic fabric. Then, the desired writings (mark, model, or design) are silk-screen printed on such labels, and the label is sewed to the jeans, typically along the waist, so as to act as a belt loop. To this aim, the label is sewed only along the upper and lower edges.

. It is not infrequent that the thus-manufactured label entangles in protruding objects, such as handles or others, with the consequence that the label can tears because of the poor strength of the manufacturing material.

. Another problem relating to the above-described labels is the fact that the writings may be obtained only by silk-screen printing, which is a quite complex and expensive method, while it would be desirable to be capable of using the hot-foil printing technique.

. There are natural treated leather or leather labels, which are provided with a high tearing resistance, and on which the writings can be printed by hot-foil printing; however, these labels are very expensive and are employed only for high commercial value jeans items.

. Therefore, the object of the present invention is to provide a label for denim fabric items, that is provided with the advantages of leather labels, but that has a definitely lower cost.

. Such object is achieved by a label for denim fabric items as set forth in the annexed claims, the definitions of which form an integral part of the present description.

. The label for denim fabric items according to the invention, that will have the typical shape and dimensions of a conventional label, which is known for such use, is made of a polyamide-based nonwoven fabric impregnated with a polyurethane resin.

. The polyamide-based nonwoven fabric of the invention can be 100% polyamide, or it can comprise, in addition, polyester fibres (PE), polypropylene (PP), polylactides (PLA), polyethylene sulfone (PES), acrylic polymers in an amount ranging between 5% and 20%. Preferably, the nonwoven fabric of the invention is 100% polyamide.

. For the manufacturing of the nonwoven fabric, fibres are preferably used having a denier from 1.5 to 2.2 Dtex, or between 1.7 and 1.9 Dtex, and with a length between 3 and 5 mm, or between 3.5 and 4 mm.

. The nonwoven fabric has a basic weight ranging between 100 and 200 gr/m², or between 110 and 150 gr/m².

. The nonwoven fabric of the invention can comprise two or more webs. Preferably, it is composed of three webs and is manufactured according to the spunlace technique.

. In an embodiment, the webs are subjected to carding, and then they are bonded by conventional methods. Preferably, the hydroentangling will take place, with injectors pressure ranging between 40 bars and 150 bars, or between 50 bars and 135 bars.

. The thus-obtained spunlaced nonwoven fabric is then subjected to drying by means of conventional methods, such as by passing it through cylinders to press the nonwoven, and hot-drying it.

. In an embodiment, the thus-obtained nonwoven fabric is dyed in line, for example, by means of a foulard technique. Such technique, which is completely conventional and widely used in the fabric industry, provides for the passage of the nonwoven fabric in a bath containing an excess of dye, then the squeezing out the excess of dye solution from the nonwoven by passing it through heated rollers, which also have the function of promoting the fixation of the dye on the substrate.

. However, other dyeing techniques can be selected from those known to one skilled in the art, without anyhow departing from the scope of the present invention. For example, the Termosol dyeing technique can be used for the implementation of a nonwoven fabric in the dark tonalities.

. After the dyeing step, the nonwoven fabric is subjected to a hot drying process, preferably at temperatures ranging between 120 °C and 150 °C.

. The nonwoven fabric obtained as described before is then subjected to an impregnation step with polyurethane resins. Preferably, polyurethane resins based on aromatic polyethers are used. Such resins are obtained by the condensation of di-isocyanates with aromatic polyether polyols, and they are commercially available.

. In an embodiment, the impregnation is carried out by means of the coagulation technique, which provides for:
- Applying of the polyether-based polyurethane resin on the nonwoven fabric by a scraping blade;
- treating the thus-padded nonwoven fabric in coagulation tank containing a water/dimethylformamide mixture, in which the dimethylformamide is present in volumetric percentages ranging between 10% and 40%, or between 15% and 35%, for a period of time ranging between 5 minutes and 10 minutes, and at a temperature ranging between 18 °C and 35 °C;
- washing with demineralised water in countercurrent;
- hot drying.

. In the hot drying step, the process proceeds at a constant temperature ranging between 140 °C and 150 °C.

. Then, the thus-padded nonwoven fabric is subjected to the following processing operations, in any order:
- cutting out the nonwoven fabric in the shapes and dimensions of a label for clothing items;
- printing of a writing on said nonwoven fabric by means of a silk-screen printing technique, or by hot printing.
Labels are thus obtained, which have the typical non-treated leather appearance, that are mechanically resistant to wear and tear, and are chemically resistant to Stone Wash and enzymatic washing operations.

. It shall be apparent that those of ordinary skill in the art will be able to make a number of variations to the invention, without anyhow departing from the protection scope defined by the annexed claims herein below.

## Claims

1. A label of the type which can be used on denim fabric clothing items, **characterized in that** it is made of a polyamide-based nonwoven fabric, which is impregnated with polyurethane resin.

2. The label according to claim 1, wherein said nonwoven fabric comprises polyamide and polyester fibres (PE), polypropylene (PP), polylactides (PLA), polyethylene sulfone (PES), acrylic polymers, in an amount ranging between 5% and 20%.

3. The label according to claim 1, wherein said nonwoven fabric is 100% polyamide.

4. The label according to any one of the claims 1 to 3, wherein said nonwoven fabric comprises fibres with a denier from 1.5 to 2.2 Dtex, or between 1.7 and 1.9 Dtex, and with a length between 3 and 5 mm, or between 3.5 and 4 mm.

5. The label according to any one of the claims 1 to 4, wherein said nonwoven fabric is composed of two or more webs, or three webs, and has a basic weight ranging between 100 and 200 gr/m², or between 110 and 150 gr/m² .

6. The label according to any one of the claims 1 to 5, wherein said nonwoven fabric is a spunlaced nonwoven fabric.

7. The label according to any one of the claims 1 to 6, wherein said nonwoven fabric comprises a dye.

8. The label according to any one of the claims 1 to 7, wherein said polyurethane resin is a polyurethane resin based on aromatic polyethers.

9. The label according to any one of the claims 1 to 8, wherein said nonwoven fabric is impregnated by coagulation.

10. The label according to any one of the claims 1 to 9, wherein said label comprises silk-screen printed writings.

11. The label according to any one of the claims 1 to 9, wherein said label comprises hot-printed writings.

12. A method for the manufacture of a label according to any one of the claims 1 to 11, comprising the following steps:
a) Providing a polyamide-based spunlaced nonwoven fabric;
b) Dyeing said spunlaced nonwoven fabric;
c) impregnating said spunlaced nonwoven fabric with a polyurethane resin;
d) Printing a writing on said spunlaced nonwoven fabric which is impregnated with a polyurethane resin;
e) Cutting out said spunlaced nonwoven fabric which is impregnated with a polyurethane resin in order to obtain said labels therefrom.

13. The method according to claim 12, wherein, in said step a), said nonwoven fabric is a three-web nonwoven which is hydroentangled with injectors pressure ranging between 40 bars and 150 bars, or between 50 bars and 135 bars.

14. The method according to claim 12 or 13, wherein said dyeing step b) is carried out by a foulard technique or a Termosol technique.

15. The method according to any one of the claims 12 to 14, wherein said step c) is carried out by means of a coagulation technique, which provides for:
- Applying the polyether-based polyurethane resin on the nonwoven fabric by a scraping blade;
- Treating the thus-padded nonwoven fabric in a **coagulation tank** containing a water/dimethylformamide mixture, in which the dimethylformamide is present in volumetric percentages ranging between 10% and 40%, or between 15% and 35%, for a period of time ranging between 5 minutes and 10 minutes, and at a temperature ranging between 18 °C and 35 °C;
- washing with demineralised water in countercurrent;
- hot drying.

16. The method according to any one of the claims 12 to 15, wherein said step d) is carried out by a hot printing technique.
